# EUROPEAN PATENT APPLICATION

(11) **EP 1 742 383 A1**
(43) Date of publication of application: **10.01.2007**
(21) Application number: 05727993.7
(22) Date of filing: 31.03.2005
(51) Int. Cl.: H04B 7/06, H04B 7/08

(54) **WIRELESS COMMUNICATION SYSTEM AND RADIO STATION**

(30) Priority: 27.04.2004 JP 2004130842; 23.02.2005 JP 2005047702
(71) Applicant: MATSUSHITA ELECTRIC INDUSTRIAL CO., LTD., Osaka 571-8501 (JP)
(72) Inventor: NAKAGAWA, Yoichi., c/o Matsushita El.Ind.Co.Ltd, Osaka-shi, Osaka 540-6319 (JP); KOBAYASHI, Hirokazu., c/o Matsushita El.Ind.Co.Ltd, Osaka-shi, Osaka 540-6319 (JP); MURAKAMI, Yutaka.,c/o Matsushita El.Ind.Co.Ltd, Osaka-shi, Osaka 540-6319 (JP); KISHIGAMI, Takaaki., c/o Matsushita El.Ind.Co.Ltd, Osaka-shi, Osaka 540-6319 (JP); MIYOSHI, Kenichi., c/o Matsushita El.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/006316
(87) International publication number: WO 2005/107099

(57) **Abstract**

It is an object of the invention to provide a wireless communication system capable of decreasing the effect of radio interference on a different wireless station using the same frequency band and preventing information from leaking to a different wireless station while ensuring the transmit quality of a wireless channel used between specific wireless stations according to a simple configuration in a quasi-static fading environment of wireless communications.

A transmit station 101 selects one optimum antenna from among antennas based on quality information of a transmission path 104 and transmits a packet to a receive station 102 from the selected antenna. The receive station 102 receives the packet from the transmit station 101 at one antenna selected from among antennas and switches the currently selected antenna to a different antenna. The receive station 102 transmits a response packet to the received packet to the transmit station 101 from the antenna to which the current antenna is switched. The transmit station 101 receives the response packet at each of the antennas, selects the antenna with the best receive quality as a packet transmit antenna, and transmits a packet to the receive station 102 from the selected antenna. Then, the processing is repeated.

## Description

### TECHNICAL FIELD

This invention relates to a wireless communication system including a base station and an associated station for conducting wireless packet communications.

### BACKGROUND ART

An access technology in wireless communications is intended for making it possible to share frequencies in a limited radio propagation space for enhancing convenience of a large number of users as many as possible. However, geographic conditions and motion of human beings are complicated in the actual radio propagation space and thus not only the transmission path of a wireless channel fluctuates irregularly with time (which will be hereinafter referred to as time fluctuation), but also a plurality of wireless stations using the same frequency band in the limited radio propagation space can be an interference source with each other. That is, it is practically difficult for each wireless station to control its communication area strictly and thus there is a possibility that radio interference more than stipulated may be received, which causes the errors on the transmission path to occur for largely degrading the transmission quality.

Considering from the viewpoint of the security of information communications, wireless communications generally use the public radio propagation space and thus receiving by a third party is comparatively easy. Thus, wireless communications also have a fundamental defect that there is a fear of information leakage as the communication description is intercepted.

In recent years, the demand for the access technology for making it possible to share the frequencies and the radio propagation space has grown not only in the same system, but also between systems using different communication protocols. Further, commodity and service fields using wireless communications such as wireless connection of digital household electrical appliances in a home and high-speed data communication service at a hot spot start to spread dramatically. Therefore, it is predicted that a problem of radio interference between wireless channels caused by the complicated radio propagation space of wireless communications, a problem of communication interception on a transmission path that cannot be avoided to hold the public nature of the radio propagation space, and the like will become furthermore important problems in the future.

A transmission path in a wireless channel of a mobile telephone network, a wireless LAN, etc., becomes a transmission path characteristic involving complicated and irregular time fluctuation called multipath propagation environment. Such a transmission path is characterized by the spatial position relationship of wireless stations instantaneously and frequency spectrum, amplitude, phase, arrival direction, delay time, polarization state, and the like are used as parameters representing the characteristic.

In the multipath propagation environment, a wireless station and its surrounding scatter move irregularly and thus the state of the transmission path fluctuates irregularly. It is known that the transmission path fluctuation can be modeled according to a Rayleigh probability distribution because it shows independent fluctuation characteristics for the time and the space. Wireless communications used in a home or an office often are semi-fixed (wireless station is static within a given time) and thus it is a common practice to model as a quasi-static fading environment. The quasi-static fading environment is a propagation environment in which the transmission path state does not change if the position of the wireless station does not change within the time during which the transmission path can be assumed to be static, namely, the time fluctuation can be ignored. From a different angle, it is an environment in which the transmission path fluctuates irregularly depending on the position of the wireless station (in fact, the position of the antenna of the wireless station) if time fluctuation does not occur.

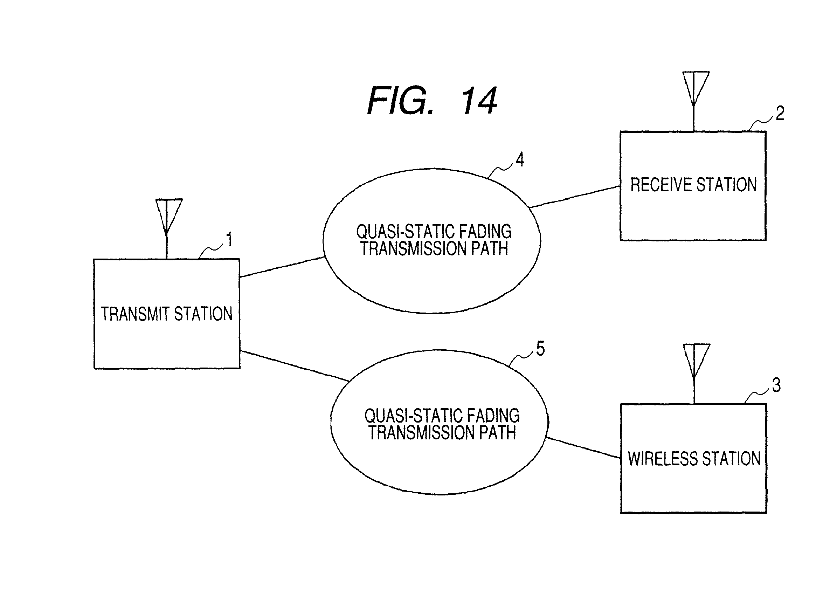

FIG. 14 shows the case where a wireless station (which will be hereinafter referred to as transmit station) 1 for transmitting an information signal , a wireless station (which will be hereinafter referred to as receive station) 2 for conducting wireless communications with the transmit station 1, and a wireless station 3 of a third party exist at the same time in the communication area of the transmit station 1 in the quasi-static fading environment. It can be assumed that a transmission path 4 between the transmit station 1 and the receive station 2 and a transmission path 5 between the transmit station 1 and the wireless station 3 are unchanged within one time. However, received signal power for the information signal from the transmit station 1 depends on the position of the antenna of the receive station 2 and the position of the antenna of the wireless station 3. That is, the received signal power of the information signal fluctuates irregularly depending on the relative positional relationship between the antennas of the wireless stations, but if the antenna of the wireless station and its surrounding scatter do not move, the level does not change and becomes constant. This means that the received signal power of the information signal in the wireless station 3 becomes constant within one time and thus can become a standing interference signal component for the wireless station 3 of a third party.

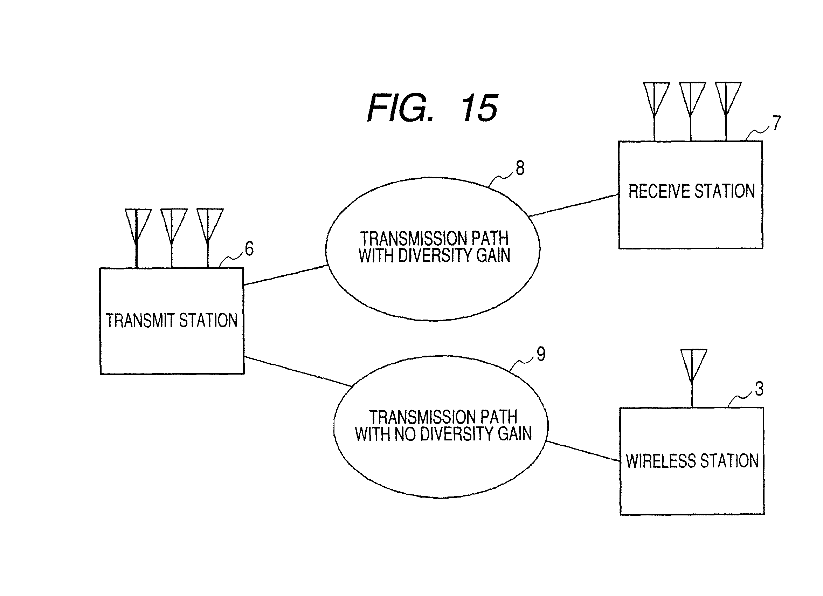

Antenna diversity using a plurality of antennas is known as a method of improving the transmission path quality in the fading environment. FIG. 15 shows the case where a transmit station 6 and a receive station 7 have each a plurality of antennas in the fading environment involving time fluctuation. In the antenna diversity, control is performed so as to adaptively select an antenna of the transmit station 6 for transmitting an information signal and an antenna of the receive station 7 for receiving the information signal based on quality information of a transmission path 8 between the transmit station 6 and the receive station 7. Accordingly, the transmission quality of the transmission path 8 is compensated by the diversity gain produced by the antenna selection. However, no diversity gain exists in a transmission path 9 between the transmit station 6 and a wireless station 3 and thus degradation of the transmission quality caused by fading occurs.

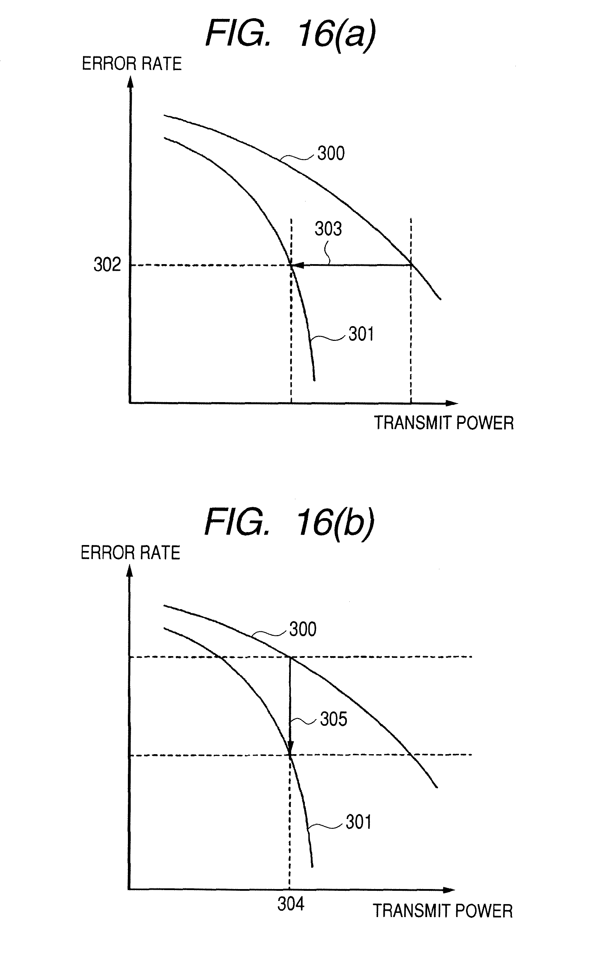

The relationship between the diversity gain and the transmission quality will be discussed with FIG. 16. FIG. 16 (a) and FIG. 16 (b) are both drawings to show that the antenna diversity in the fading environment can decrease the errors on the transmission path.
In FIG. 16, numeral 300 indicates the error rate characteristic of the transmission path 9 (transmission path with no diversity gain) in the fading environment involving time fluctuation, and numeral 301 indicates the error rate characteristic of the transmission path 8 whose transmission quality is compensated by antenna diversity gain. When transmitting an information signal at a given error rate 302 is required in the transmission path 8, if the transmission quality is compensated by diversity gain as shown in FIG. 16 (a), the transmit power can be decreased relatively as much as indicated by the arrow. This means that the transmission quality is compensated by the diversity gain in the transmission path 8 in the fading environment involving time fluctuation and thus the transmit station 6 can decrease the transmit power of the information signal. It is suggested that consequently average interference signal power given to the wireless station 3 of a third party can be suppressed.

FIG. 16 (b) shows the case where the transmit station 6 attempts to transmit an information signal to the receive station 7 with given transmit power 304. At this time, since the transmission quality is compensated by the antenna diversity gain in the transmission path 8, the error rate of the transmission path 8 can be lessened as much as the arrow indicated by numeral 305 as compared with the error rate of the transmission path 9. This means that if the wireless station 3 attempts to receive and demodulate the information signal, relative transmission path errors increase and it becomes impossible to transmit the information signal correctly because no diversity gain exists in the transmission path 9. In other words, as the transmission quality of the transmission path 8 is compensated by the antenna diversity gain, transmission path errors in the wireless station 3 can be increased accordingly. It is suggested that consequently the wireless station 3 of a third party can be prevented from intercepting the information signal.

For the technical problem of compensating radio interference between wireless channels, a technique of using an adaptive array antenna made up of a plurality of antennas like antenna diversity and controlling a directional beam for decreasing radio interference in other wireless channels is proposed (for example, refer to patent document 1).

For the technical problem of preventing communication interception, in addition to the use of the antenna diversity described above, a technique of using irregular time fluctuation of the parameters of the transmission path and dependency on the transmit and receive locations to generate a secret key and sharing the secret key is proposed (for example, refer to non-patent document 1).

Patent document 1: JP-A-2003-18074
Non-patent document 1: HORIIKE Motoki and three others, "Rikujyou idou tuushinro no fukisokuhendounimotozuku himutsukagi kyoyuu houshiki," Shingaku gihou, RCS2002-173, October 2002.

### DISCLOSURE OF THE INVENTION

### PROBLEMS TO BE SOLVED BY THE INVENTION

However, if the wireless station equipped with an adaptive array antenna controls a directional beam based on the parameters of the transmission path for the wireless station to communicate with, the problem of a possible standing interference source for any other wireless station using the same frequency band remains. For example, another wireless station of a third party can exist in the directional beam direction of the adaptive array antenna depending on the positional relationship between the wireless stations. As null of directional beam is formed in a specific direction, the adaptive array antenna can be operated so as to suppress the transmit signal power in the direction. It is known theoretically that the suppression effect can be sufficiently provided as the number of antennas is increased, however, the signal processing amount becomes enormous in proportion to the number of antennas and in addition, an increase in the number of antennas is hard to become a realistic measure particularly in a mobile terminal; this is a problem.

In the technique of sharing a secret key generated based on the parameters of the transmission path between specific wireless stations and encrypting an information signal, the wireless stations need to execute processing of parameter estimation and key generation. Thus, more advanced hardware performance must be demanded to ensure parameter estimation accuracy and signal processing speed for an increasingly sophisticated mobile terminal; this is a problem.

Since the interference signal component between wireless stations fluctuates irregularly with time in the fading environment, occurrence of the errors on the transmission path caused by the interference signal component also becomes irregular and the error correction effect can be provided according to the transmission techniques of interleave, transmission path coding, and packet resending control. However, the existence of a standing interference source cannot be ignored in the quasi-static fading environment and thus it is hard to provide the error correction effect according to the transmission techniques as interference countermeasures; this is a problem.

The antenna diversity becomes effective for improving the transmission path quality in the fading environment; however, if the positions of the transmit station 6 and the receive station 7 are semi-fixed, the transmission path 8 is in the quasi-static fading environment and communications are continued between the transmit station 6 and the receive station 7 in a state in which the optimum antenna is selected. Thus, the possibility that an interference signal involving no time fluctuation may received in the wireless station 3 is high and if the wireless station 3 attempts to demodulate the interference signal intentionally, transmission errors are lessened as no time fluctuation is involved and it becomes easy to restore information; this is a problem. That is, as the transmission quality of the transmission path 8 is compensated by the diversity gain, relative transmission path errors in the wireless station 3 can be increased accordingly, but transmission path errors are lessened depending on the receive sensitivity of the wireless station 3 because the interference signal does not involve time fluctuation, and the effect of information leakage prevention is reduced; this is a problem.

The invention is intended for solving the problems in the related arts and it is an object of the invention to provide a wireless communication system capable of decreasing the effect of radio interference on a different wireless station using the same frequency band and preventing information from leaking to a different wireless station while ensuring the transmission quality of a wireless channel used between specific wireless stations according to a simple configuration in a quasi-static fading environment of wireless communications.

### MEANS FOR SOLVING THE PROBLEMS

The wireless communication system of the invention is a wireless communication system including a base station and an associated station for conducting wireless packet communications, wherein the base station and the associated station have each a plurality of antennas, wherein the base station includes base station antenna selection means for selecting a packet transmit antenna from among the plurality of antennas, antenna selection control means for specifying the antenna to be selected by the base station antenna selection means based on quality information of each transmission path established between the plurality of antennas and the antenna selected from among the plurality of antennas of the associated station, and transmit control means for transmitting a packet to be transmitted to the associated station from the antenna selected by the base station antenna selection means, and wherein the associated station includes associated station antenna selection means for selecting one antenna from among the plurality of antennas, receive means for receiving the packet through the antenna selected by the associated station antenna selection means, and antenna switch control means for controlling so as to switch the antenna selected by the associated station antenna selection means to a different antenna in response to receiving the packet by the receive means.

According to the configuration, the base station selects the packet transmit antenna based on the quality information of each transmission path established between the plurality of antennas and the antenna selected from among the plurality of antennas of the associated station, so that the transmission quality of the packet transmitted to the associated station can be compensated. In the associated station, the selected antenna is switched to a different antenna in response to receiving the packet and thus the possibility that the antenna selected in the base station may be switched in response to the antenna switching is high. Therefore, if the positions of the base station and the associated station are fixed and the transmission path does not fluctuate with time, the packet transmitted from the base station is often received in a different wireless station as an interference signal fluctuating irregularly with time. That is, the interference signal component received by the different wireless station fluctuates with time without being standing, so that the time during which the wireless station can transmit a packet can be provided. The transmission error rate fluctuates with time depending on the interference signal component and thus the error correction effect provided by transmission path coding and interleave or packet resending control, etc., is enhanced. Thus, the effect of radio interference on a different wireless station using the same frequency band can be decreased. If a different wireless station attempts to intercept the packet, the packet is often received as an interference signal fluctuating irregularly with time and thus the errors on the transmission path, etc., occurs and it becomes difficult to restore the received signal precisely. Therefore, it is made possible to prevent information from leaking to the different wireless station.

In the wireless communication system of the invention, the base station includes transmit power control means for controlling transmit power of the packet based on the quality information.

According to the configuration, the transmit power of the packet is controlled based on the quality information, so that average interference signal power given to a different wireless station can be suppressed. Therefore, if the different wireless station attempts to intercept the packet, the average received power of the packet is suppressed and thus a relatively large transmission path error can be caused to occur in the different wireless station and the information leakage prevention effect can be more enhanced.

In the wireless communication system of the invention, the associated station includes selection probability storage means for storing the selection probability indicating what probability each of the plurality of antennas is to be selected at, receive quality information storage means for storing receive quality information associating the receive quality of the packet received at the receive means and the antenna receiving the packet with each other, and selection probability update means for updating the selection probability based on the receive quality information, and the antenna switch control means determines the different antenna based on the selection probability.

According to the configuration, for example, it is made possible to preferentially select the antenna with good receive quality of the packet received in the associated station, so that the transmission quality of the packet can be more improved.

In the wireless communication system of the invention, the base station includes space-time coding means for performing space-time coding of the packet to generate a plurality of coded packets, the base station antenna selection means selects as many antennas as the number responsive to the number of the coded packets, the transmit control means transmits the plurality of coded packets from the selected antennas to the associated station at the same time, and the associated station includes combining means for combining the plurality of coded packets received in the receive means.

According to the configuration, code gain can be provided in the transmission path between the base station and the associated station, so that it is made possible to compensate the transmission quality of a packet particularly in a low SNR transmission path.

In the wireless communication system of the invention, the base station includes RSSI estimation means for estimating RSSIs of the packets received through the plurality of antennas from the antenna selected by the associated station antenna selection means, and the quality information is the estimated RSSI.

In the wireless communication system of the invention, the packet contains a response request packet for making a request to send a receive response of the packet and a data packet, at the packet communication start time with the associated station, the transmit control means transmits the response request packet to the associated station from the antenna selected by the base station antenna selection means, the associated station receives the response request packet by the receive means and transmits a response packet of a response to the response request packet to the base station from a different antenna to which the antenna is switched by the antenna switch control means, the base station includes RSSI estimation means for estimating RSSIs of the response packets received at the plurality of antennas, the quality information is the RSSI, and the transmit control means transmits the data packet to the associated station from the antenna selected by the base station antenna selection means according to the specification based on the quality information.

According to the configuration, the base station can select the optimum antenna according to the response packet transmitted from the associated station before the data packet is transmitted.

In the wireless communication system of the invention, the data packet contains the response request packet.

According to the configuration, the base station can select the optimum antenna each time the data packet is transmitted.

In the wireless communication system of the invention, the plurality of antennas of the base station and the associated stations have different characteristics.

According to the configuration, a packet is transmitted and received while a plurality of antennas different in characteristic are switched, so that when the transmission path between the base station and the different wireless station is in a line-of-sight propagation environment and is in an environment in which the relative scattered wave level is small, it is also made possible to give intentional irregular time fluctuation to the transmission path.

The wireless station of the invention is a wireless station for conducting wireless packet communications with an associated station, and includes a plurality of antennas, antenna selection means for selecting a packet transmit antenna from among the plurality of antennas, antenna selection control means for specifying the antenna to be selected by the antenna selection means based on quality information of each transmission path established between the plurality of antennas and the antenna selected from among a plurality of antennas of the associated station, and transmit control means for transmitting a packet to be transmitted to the associated station from the antenna selected by the antenna selection means, wherein the antenna selected from among the plurality of antennas of the associated station is switched to a different antenna each time the packet is received in the associated station.

The wireless station of the invention includes transmit power control means for controlling transmit power of the packet based on the quality information.

The wireless station of the invention includes space-time coding means for performing space-time coding of the packet to generate a plurality of coded packets, wherein the antenna selection means selects as many antennas as the number responsive to the number of the coded packets, and wherein the transmit control means transmits the plurality of coded packets from the selected antennas to the associated station at the same time.

The wireless station of the invention includes RSSI estimation means for estimating RSSIs of the packets received through the plurality of antennas of the wireless station from one antenna selected from among the plurality of antennas of the associated station, wherein the quality information is the estimated RSSI.

The wireless station of the invention is a wireless station for conducting wireless packet communications with an associated station, and includes a plurality of antennas, antenna selection means for selecting one antenna from among the plurality of antennas, receive means for receiving a packet transmitted from a packet transmit antenna selected from among a plurality of antennas of the associated station through the antenna selected by the antenna selection means, and antenna switch control means for controlling so as to switch the antenna selected by the antenna selection means to a different antenna in response to receiving the packet by the receive means.

The wireless station of the invention includes selection probability storage means for storing the selection probability indicating what probability each of the plurality of antennas is to be selected at, receive quality information storage means for storing receive quality information associating the receive quality of the packet received at the receive means and the antenna receiving the packet with each other, and selection probability update means for updating the selection probability based on the receive quality information, wherein the antenna switch control means determines the different antenna based on the selection probability.

In the wireless station of the invention, the packet transmitted from the associated station is a plurality of coded packets generated by performing space-time coding of the packet, and the wireless station includes combining means for combining the plurality of coded packets received in the receive means.

In the wireless station of the invention, the plurality of antennas have different characteristics.

### ADVANTAGES OF THE INVENTION

According to the invention, there can be provided the wireless communication system capable of decreasing the effect of radio interference on a different wireless station using the same frequency band and preventing information from leaking to a different wireless station while ensuring the transmission quality of a wireless channel used between specific wireless stations according to the simple configuration in a quasi-static fading environment of wireless communications.

### BRIEF DESCRIPTION OF THE DRAWINGS

[FIG. 1] A diagram to show the schematic configuration of a wireless communication system to describe a first embodiment of the invention.
[FIG. 2] A diagram to show the schematic configuration of a transmit station of the wireless communication system to describe the first embodiment of the invention.
[FIG. 3] A diagram to show the schematic configuration of a receive RF circuit of the transmit station of the wireless communication system to describe the first embodiment of the invention.
[FIG. 4] A diagram to show the schematic configuration of a receive station of the wireless communication system to describe the first embodiment of the invention.
[FIG. 5] A sequence chart to describe the operation of the wireless communication system to describe the first embodiment of the invention.
[FIG. 6] A drawing to show the communication frame configuration concerning packets transmitted and received in the sequence in FIG. 5.
[FIG. 7] A drawing to describe the advantages in the wireless communication system to describe the first embodiment of the invention.
[FIG. 8] A diagram to show the schematic configuration of a transmit station of a wireless communication system to describe a second embodiment of the invention.
[FIG. 9] A diagram to show the schematic configuration of a transmit RF circuit of the transmit station of the wireless communication system to describe the second embodiment of the invention.
[FIG. 10] A drawing to show an example of a selection probability table.
[FIG. 11] A flowchart to show an operation flow of a receive station of a wireless communication system to describe a third embodiment of the invention.
[FIG. 12] A diagram to show the schematic configuration of a transmit station of a wireless communication system to describe a fourth embodiment of the invention.
[FIG. 13] A diagram to show the schematic configuration of a receive station of the wireless communication system to describe the fourth embodiment of the invention.
[FIG. 14] A diagram to show the schematic configuration of a wireless communication system in a related art.
[FIG. 15] A diagram to show the schematic configuration of a wireless communication system in a related art.
[FIG. 16] A drawing to describe the effect of antenna diversity in the related art.

### DESCRIPTION OF REFERENCE NUMERALS

- 101: Transmit station
- 102: Receive station
- 104: Transmission path

### BEST MODE FOR CARRYING OUT THE INVENTION

This day, the transmission techniques of interleave, transmission path coding, and packet resending control are commercially practical and if the interference signal component fluctuates irregularly during the line busy time in which information is transmitted, the error correction effect can be enhanced. That is, it is considered that the bit error rate and the packet error rate can be more decreased for improving the effective throughput value in a transmission path where irregular fluctuation is given to an interference signal component so that an interference signal is scarcely observed in one time period although the interference signal component increases instantaneously than in a transmission path where a standing interference signal is always received during the line busy time.

Then, if control can be provided so that a diversity gain is obtained for the transmission path 8 at the same time as a dynamic fading environment is created intentionally even if the transmission path 8 between the transmit station 6 and the receive station 7 is in the quasi-static fading environment in FIG. 15, not only the interference suppression effect on the wireless station 3 is produced, but also the wireless station 3 can be prevented from intercepting an information signal while the transmission quality of the information signal for the receive station 7 is ensured. A wireless communication system of an embodiment is a system provided by realizing this idea.

Wireless communication systems to describe embodiments of the invention will be discussed with reference to the accompany drawings.

### (First embodiment)

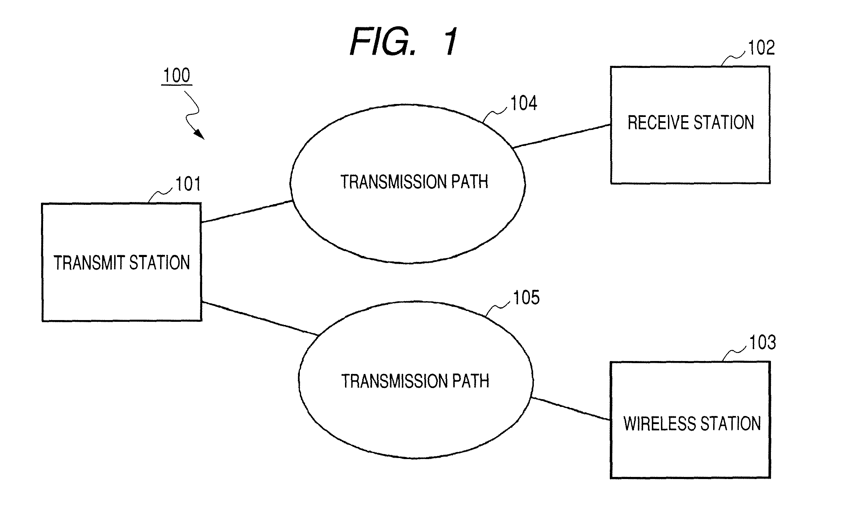

FIG. 1 is a diagram to show the schematic configuration of a wireless communication system to describe a first embodiment of the invention.
A wireless communication system 100 shown in FIG. 1 includes a wireless station 101 (which will be hereinafter referred to as transmit station 101), a wireless station 102 (which will be hereinafter referred to as receive station 102), and a wireless station 103. The transmit station 101 is an access point of a wireless LAN, etc., for example. The receive station 102 and the wireless station 103 are mobile wireless terminals of mobile telephones, LAN cards, etc., for example. The transmit station 101, the receive station 102, and the wireless station 103 exist at the same time in the communication area of the transmit station 101. The transmit station 101, the receive station 102, and the wireless station 103 can conduct wireless packet communications with each other according to the communication area provided by the transmit station 101. The transmit station 101 and the receive station 102 conduct packet communications over a transmission path 104 established between the transmit station 101 and the receive station 102. The transmit station 101 and the wireless station 103 conduct packet communications over a transmission path 105 established between the transmit station 101 and the wireless station 103. The wireless communication system 100 shown in FIG. 1 is in a quasi-static fading environment. That is, it is assumed that the transmit station 101, the receive station 102, and the wireless station 103 are installed indoors and their positions are fixed.

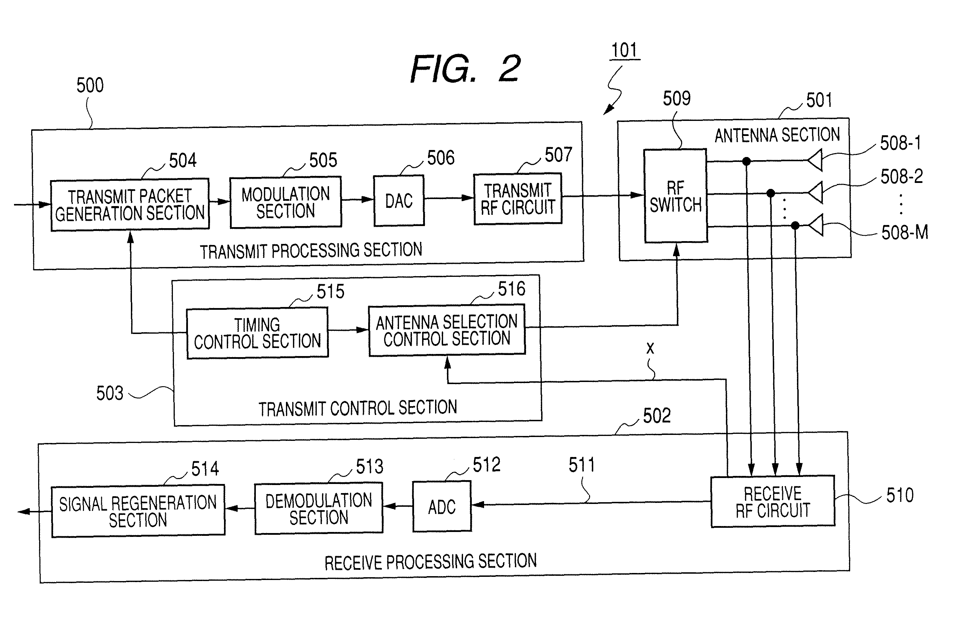

FIG. 2 is a diagram to show the schematic configuration of the transmit station of the wireless communication system to describe the first embodiment of the invention.
As shown in FIG. 2, the transmit station 101 includes a transmit processing section 500, an antenna section 501, a receive processing section 502, and a transmit control section 503.

The transmit processing section 500 includes a transmit packet generation section 504, a modulation section 505, a DAC (digital-analog converter) 506, and a transmit RF circuit 507.

The transmit packet generation section 504 inputs a response request signal for requesting a communicating party to send a packet receive response and generates a response request packet of a communication control packet. The transmit packet generation section 504 inputs an information signal train to be transmitted to the outside and generates K (K is a natural number) data packets of data transmit packets. The transmit packet generation section 504 outputs the response request packet in synchronization with a transmit timing control signal generated by the transmit control section 503. The transmit packet generation section 504 outputs K data packets in a time-division manner in order in synchronization with a transmit timing control signal generated by the transmit control section 503. Hereinafter, a response request packet and a data packet will be collectively called a transmit packet. Each of the K data packets may contain a response request packet. The transmit packet is output as a modulation signal subjected to symbol mapping processing in the modulation section 505. The modulation signal is converted from digital form into analog form in the DAC 506 and then is output to the antenna section 501 as a transmit RF signal up converted into a radio frequency in the transmit RF circuit 507.

The antenna section 501 includes M (M is two or more) antennas of antennas 508-1 to 508-M and an RF switch 509 for switching the antennas 508-1 to 508-M.

The RF switch 509 selects one from among the antennas 508-1 to 508-M in accordance with an antenna selection signal generated by the transmit control section 503. The transmit RF signal is transmitted to the communicating party through the selected antenna. The antenna section 501 receives communication control packet transmitted from the communicating party at the antennas 508-1 to 508-M and outputs to the receive processing section 502 as M receive RF signals. The received communication control packet is a response packet of a reply to a response request packet.

The receive processing section 502 includes a receive RF circuit 510, an ADC (analog-digital converter) 512, a demodulation section 513, and a signal regeneration section 514.

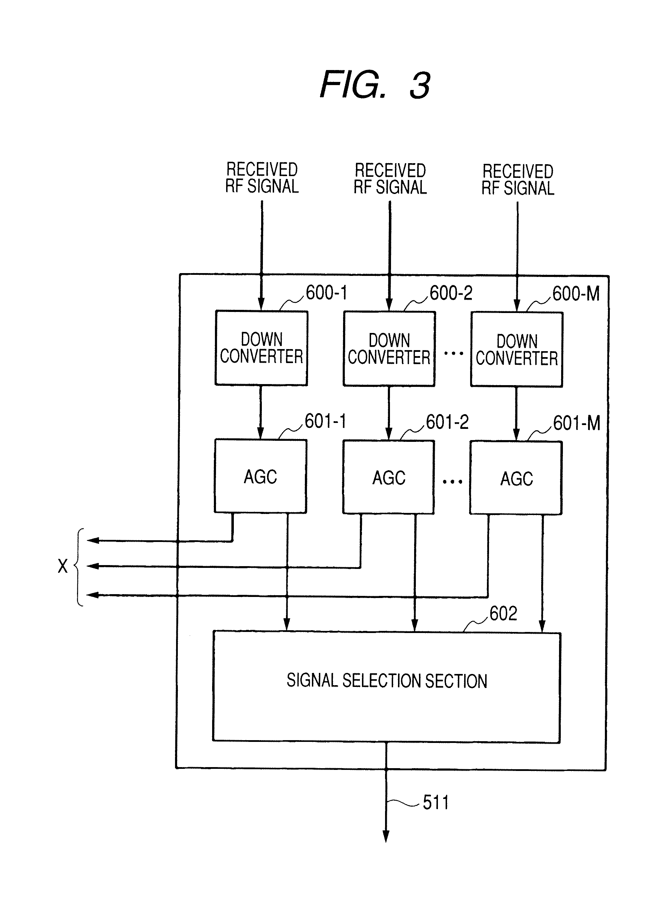

FIG. 3 is a diagram to show the schematic configuration of the receive RF circuit 510.
As shown in FIG. 3, M received RF signals are converted into received baseband signals in M down converters 600-1 to 600-M and then are automatically adjusted in signal strength by M AGCs of AGC 601-1 to AGC 601-M and are output to a signal selection section 602. At this time, the AGC 601-1 to the AGC 601-M estimate RSSIs (received signal strength indicators) of the response packet and output the RSSIs to the signal selection section 602 at the same time as adjusting the signal strengths of the received baseband signals. The signal selection section 602 selects one received baseband signal 511 (for example, with the largest RSSI) from among the M received baseband signals based on the RSSI estimation result and outputs the received baseband signal to the ADC 512. The M RSSIs estimated by the AGC 601-1 to the AGC 601-M are output to the transmit control section 503 as quality information signal X of the transmission path established with the communicating party.

In the received processing section 502, the received baseband signal 511 is converted from analog form into digital form in the ADC 512 and then is output as a demodulation signal subjected to symbol determination processing in the demodulation section 513. The signal regeneration section 514 inputs the demodulation signal, regenerates the communication control packet received from the communicating party, and outputs a response signal of a receive response from the communicating party to the response request signal.

The transmit control section 503 includes a timing control section 515 and an antenna selection control section 516.
The timing control section 515 generates a transmit timing control signal for determining the transmit timing of a transmit packet and outputs the transmit timing control signal to the transmit packet generation section 504 and also generates a switch timing control signal for determining the output timing of an antenna selection control signal and outputs the switch timing control signal to the antenna selection control section 516.
The antenna selection control section 516 generates an antenna selection control signal for selecting the antenna with the largest RSSI estimation value from among the M antennas of the antennas 508-1 to 508-M based on the quality information signal X while synchronizing with the switch timing control signal and outputs the antenna selection control signal to the RF switch 509. At this time, it is desirable that the timing control section 515 should output the switch timing control signal before outputting the transmit timing control signal to remove the effect of the switch operation time in the RF switch 509.

Processing of selecting one antenna from among the M antennas of the antennas 508-1 to 508-M by the RF switch 509 in the transmit station 101 can use the antenna diversity technique conducted formerly.

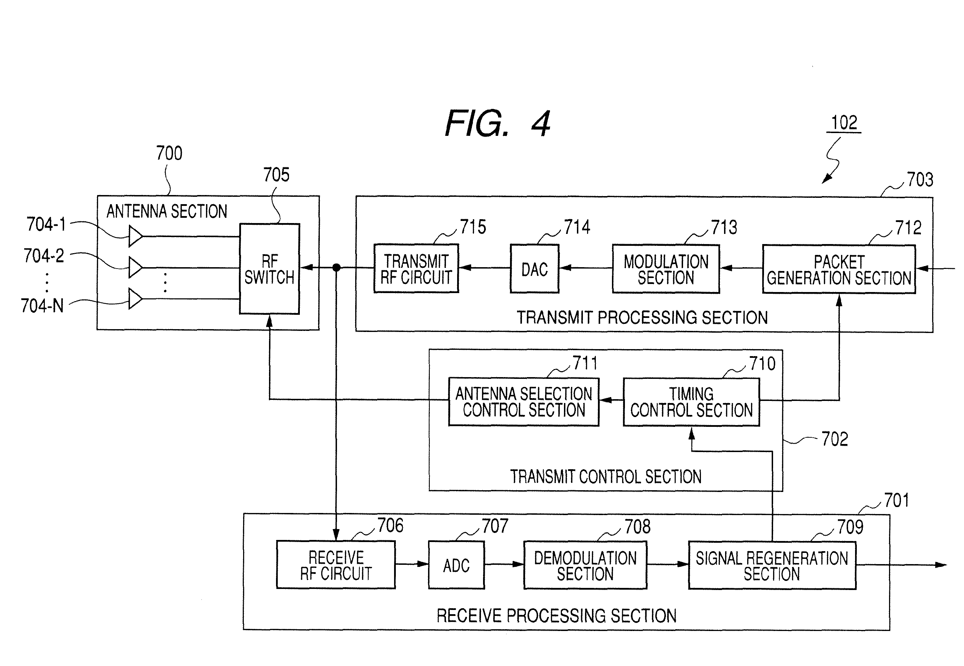

FIG. 4 is a diagram to show the schematic configuration of the receive station of the wireless communication system to describe the first embodiment of the invention.
As shown in FIG. 4, the receive station 102 includes an antenna section 700, a receive processing section 701, a transmit control section 702, and a transmit processing section 703.

The transmit processing section 703 includes a packet generation section 712, a modulation section 713, a DAC 714, and a transmit RF circuit 715.
The packet generation section 712 inputs a response signal of a receive response to a response request signal and generates a response packet of a communication control packet. The packet generation section 712 outputs the response packet in synchronization with a transmit timing control signal generated by the transmit control section 702. The response packet is output as a modulation signal subjected to symbol mapping processing in the modulation section 713. The modulation signal is converted from digital form into analog form in the DAC 714 and then is output as a transmit RF signal up converted into a radio frequency in the transmit RF circuit 715.

The antenna section 700 includes N (N is two or more) antennas of antennas 704-1 to 704-N and an RF switch 705 for switching the antennas 704-1 to 704-N.
The RF switch 705 selects one from among the antennas 704-1 to 704-N in accordance with an antenna selection signal generated by the transmit control section 702. The transmit packet transmitted from the transmit station 101 is received through the selected antenna and is output as a received RF signal. The response packet output from the transmit RF circuit 715 is transmitted to the communicating party through the antenna selected in the RF switch 705.

The receive processing section 701 includes a receive RF circuit 706, an ADC 707, a demodulation section 708, and a signal regeneration section 709.
In the receive processing section 701, the receive RF signal output from the RF switch 705 is down converted in the receive RF circuit 706 and then is output as a received baseband signal subjected to analog-digital conversion in the ADC 707. The received baseband signal is output as a demodulation signal subjected to symbol determination processing in the demodulation section 708. The signal regeneration section 709 inputs the demodulation signal, outputs a trigger to the transmit control section 702, regenerates the transmit packet transmitted from the communicating party, and outputs a response request signal and an information signal train.

The transmit control section 702 includes a timing control section 710 and an antenna selection control section 711.
The timing control section 710 generates a transmit timing control signal for determining the transmit timing of a response packet and outputs the transmit timing control signal to the packet generation section 712 and also generates a switch timing control signal for determining the output timing of an antenna selection control signal and outputs the switch timing control signal to the antenna selection control section 711. The antenna selection control section 711 generates an antenna selection control signal for selecting an antenna different from the currently selected antenna from among the antennas 704-1 to 704-N while synchronizing with the switch timing control signal and outputs the antenna selection control signal to the RF switch 705. It is desirable that the timing control section 710 should output the switch timing control signal before outputting the transmit timing control signal to remove the effect of the switch operation time in the RF switch 705. Whenever the receive RF circuit 706 receives a transmitted packet, the timing control section 710 outputs the switch timing control signal to the antenna selection control section 711 in response to the trigger output from the signal regeneration section 709.

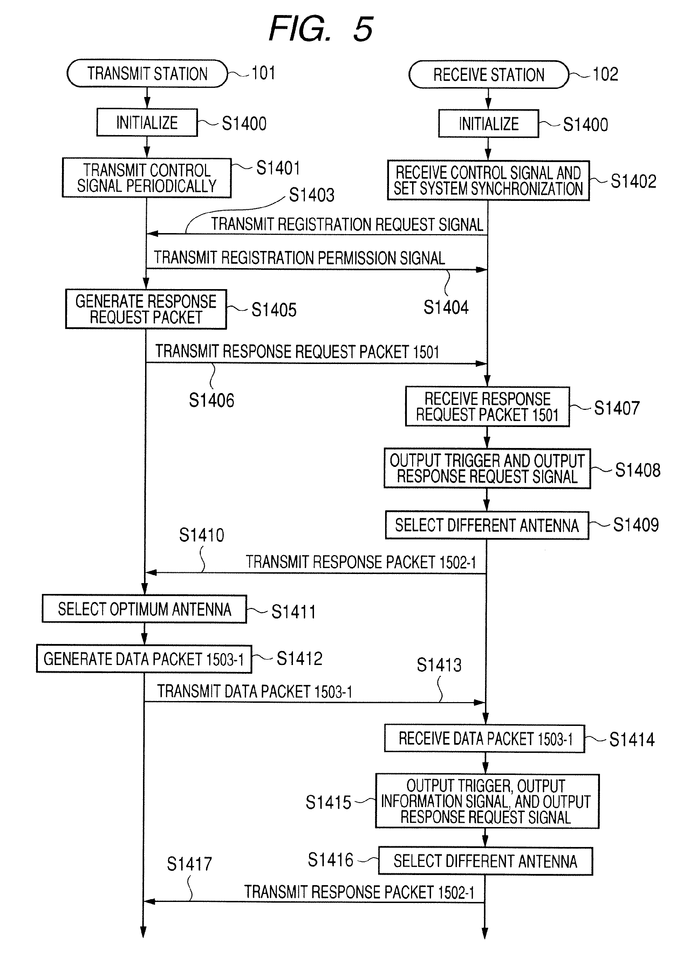

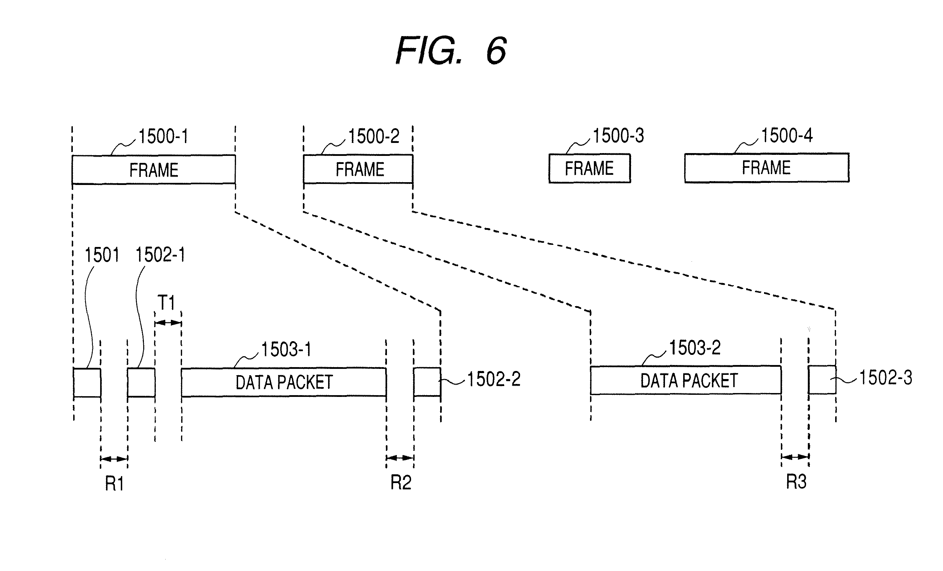

The operation of the described wireless communication system from synchronization establishment of a wireless channel to completion of transmitting the packet to be transmitted will be discussed with FIGS. 5 and 6. In the description to follow, it is assumed that the transmit station 101 is an access point and the receive station 102 is a mobile wireless terminal.
FIG. 5 is a sequence chart to describe the operation of the wireless communication system to describe the first embodiment of the invention. FIG. 6 is a drawing to show the communication frame configuration concerning packets transmitted and received in the sequence in FIG. 5. In FIG. 6, numerals 1500-1 to 1500-4 denote four communication frames, numeral 1501 denotes a response request packet, numerals 1502-1 to 1502-3 denote response packets, and numerals 1503-1 and 1503-2 denote data packets.

The transmit station 101 and the receive station 102 are initialized just after power is turned on or upon receiving a specific signal. At the same time, the frequency and the state of time synchronization, etc., are set according to a predetermined procedure (step S1400). The transmit station 101 transmits a control signal on which control information is superposed every given time in a given time after completion of the initialization (step S1401).

After completion of the initialization, the receive station 102 starts to search for the control signal from the transmit station 101. Upon receiving the control signal transmitted from the transmit station 101, the receive station 102 detects the receive time, the frequency of the control signal and synchronizes the time and the frequency with the time and the frequency possessed by the system (which will be hereinafter referred to as "system synchronization") (step S1402). After the system synchronization is complete normally, the receive station 102 transmits a registration request signal for registering its presence in the transmit station 101 (step S1403). The transmit station 101 transmits a registration permission signal in response to the registration request signal from the receive station 102, thereby permitting registration of the receive station 102 (step S1404). After the registration is permitted, if a transmit packet needs to be transmitted from the transmit station 101 to the receive station 102, the following processing is performed:

### (Processing in communication frame 1500-1)

In the transmit station 101, the transmit packet generation section 504 generates the response request packet 1501 (step S1405). The response request packet 1501 is input through the modulation section 505, the DAC 506, and the transmit RF circuit 507 to the RF switch 509 and is transmitted from the antenna 508-m selected by the RF switch 509 (this antenna is determined at random, for example) through the transmission path 104 established between the antenna 508-m and the antenna selected in the receive station 102 to the receive station 102 (step S1406).

In the receive station 102, the response request packet 1501 is received through the antenna 704-n selected by the RF switch 705 (step S1407). The response request packet 1501 is passed through the receive RF circuit 706, the ADC 707, the demodulation section 708, and the signal regeneration section 709 in order. From the signal regeneration section 709, a trigger is output to the timing control section 710 and a response request signal is also output (step S1408).

When receiving the trigger, the timing control section 710 outputs a switch timing control signal to the antenna selection control section 711. The antenna selection control section 711 generates an antenna selection control signal to select an antenna 704-n' different from the currently selected antenna 704-n (n'≠n) from among the antennas 704-1 to 704-N in synchronization with the switch timing control signal and outputs the antenna selection control signal to the RF switch 705. Accordingly, the RF switch 705 selects the antenna 704-n' (step S1409). The selected antenna may be any if it is different from the currently selected antenna; it may be determined at random.

After the antenna 704-n' is selected, in the receive station 102, a response signal is input as a reply to the response request signal to the packet generation section 712, which then generates the response packet 1502-1. The response packet 1502-1 is input via the modulation section 713, the DAC 714, and the transmit RF circuit 715 to the RF switch 705 as a transmit RF signal, and is transmitted from the antenna 704-n' selected by the RF switch 705 through the transmission path 104 established between the antenna 704-n' and the antennas 508-1 to 508-M of the transmit station 101 to the transmit station 101 (step S1410).

In the transmit station 101, the response packet 1502-1 is received at the antennas 508-1 to 508-M and M received RF signals are input to the receive RF circuit 510. The M received RF signals are converted into received baseband signals in the down converters 600-1 to 600-M and then are automatically adjusted in signal strength by the AGC 601-1 to 601-M and are output to the signal selection section 602. At this time, the AGCs 601-1 to 601-M estimate the RSSIs of the response packet 1502-1 received at the antennas and output the RSSIs to the signal selection section 602 at the same time as adjusting the signal strengths of the received baseband signals. The RSSI becomes quality information of the transmission path 104 established between the antenna 704-n' selected in the receive station 102 and the antennas 508-1 to 508-M of the transmit station 101.
The signal selection section 602 selects one received baseband signal 511 (for example, with the largest RSSI) from among the M received baseband signals based on the M RSSI estimation results and outputs the received baseband signal to the ADC 512. The quality information signal X containing M RSSIs estimated by the AGCs 601-1 to 601-M is output to the antenna selection control section 516. It is estimated that the antenna 508-m' where the received baseband signal 511 is provided has high receive sensitivity and thus it is estimated that the antenna can best communicate with the antenna 704-n'. Thus, the antenna 508-m' is selected, whereby diversity gain can be secured and the transmission quality of the packet transmitted from the transmit station 101 to the receive station 102 can be improved.

The received baseband signal 511 is converted from analog form into digital form in the ADC 512 and then is output as a demodulation signal subjected to symbol determination processing in the demodulation section 513. The signal regeneration section 514 inputs the demodulation signal, regenerates the response packet 1502-1, and outputs a response signal.

In the transmit station 101 receiving the response signal, the timing control section 515 generates a transmit timing control signal for determining the transmit timing of a transmit packet and outputs the transmit timing control signal to the transmit packet generation section 504 and also generates a switch timing control signal for determining the output timing of an antenna selection control signal and outputs the switch timing control signal to the antenna selection control section 516. The antenna selection control section 516 generates an antenna selection control signal for selecting the antenna 508-m' optimum for communications with the receive station 102 from among the M antennas of the antennas 508-1 to 508-M based on the input quality information signal X while synchronizing with the switch timing control signal and outputs the antenna selection control signal to the RF switch 509. Accordingly, the antenna 508-m' is selected by the RF switch 509 (step S1411).

The transmit packet generation section 504 inputs the information signal train to be transmitted to the receive station 102 and generates the data packet 1503-1 as a transmit packet (step S1412). It is assumed that the data packet 1503-1 contains a response request packet.
The transmit packet generation section 504 outputs the data packet 1503-1 in synchronization with a transmit timing control signal generated by the transmit control section 503. The output data packet 1503-1 is output as a modulation signal subjected to symbol mapping processing in the modulation section 505. The modulation signal is converted from digital form into analog form in the DAC 506 and then is output to the antenna section 501 as a transmit RF signal up converted into a radio frequency in the transmit RF circuit 507. The transmit RF signal is transmitted to the receive station 102 through the antenna 508-m' selected at step S1411 (step S1413).

In the receive station 102, the data packet 1503-1 is received through the antenna 704-n' selected by the RF switch 705 (step S1414). The data packet 1503-1 is passed through the receive RF circuit 706, the ADC 707, the demodulation section 708, and the signal regeneration section 709 in order. From the signal regeneration section 709, a trigger is output to the timing control section 710 and a response request signal and one information signal are also output (step S1415).

When receiving the trigger, the timing control section 710 outputs a switch timing control signal to the antenna selection control section 711. The antenna selection control section 711 generates an antenna selection control signal to select an antenna 704-n" different from the currently selected antenna 704-n' (n' ≠ n") from among the antennas 704-1 to 704-N in synchronization with the switch timing control signal and outputs the antenna selection control signal to the RF switch 705. Accordingly, the RF switch 705 selects the antenna 704-n" (step S1416).

After the antenna 704-n" is selected, in the receive station 102, a response signal is input as a reply to the response request signal to the packet generation section 712, which then generates the response packet 1502-2. The response packet 1502-2 is input via the modulation section 713, the DAC 714, and the transmit RF circuit 715 to the RF switch 705 as a transmit RF signal, and is transmitted from the antenna 704-n" selected by the RF switch 705 through the transmission path 104 to the transmit station 101 (step S1417). The processing of the communication frame 1500-1 is now complete.

### (Processing in communication frame 1500-2)

In the transmit station 101 receiving the response packet 1502-2, similar processing to that at steps S1411 to S1413 is performed. That is, the optimum antenna is selected based on the quality information (RSSI) of the transmission path 104 established with the antenna 704-n" selected in the receive station 102, and the data packet 1503-2 is transmitted to the receive station 102 through the selected antenna. In the receive station 102 receiving the data packet 1503-2, similar processing to that at steps S1414 to S1417 is performed, and the response packet 1502-3 is transmitted to the transmit station 101. Similar processing to that of the communication frame 1500-2 is performed up to communication frame 1500-4 and when the data packets 1503-1 to 1503-4 are all transmitted from the receive station 102 to the transmit station 101, the operation is complete.

In the described processing, steps S1405 and S1406 may be inserted between the communication frames 1500-2 to 1500-4 as required. In doing so, degradation of the antenna diversity gain as the mobile wireless terminal or its surrounding scatter moves can be avoided.

In the description given above, the processing at steps S1400 to S1404 assumes the operation of a general wireless communication system and is not necessarily required.

The processing at steps S1405 to S1410 as well as the processing at steps S1400 to S1404 is not necessarily required, in which case the antenna diversity gain cannot be expected only when the data packet 1503-1 is transmitted. If the processing at steps S1400 to S1410 is skipped, the antenna selected at step S1411 may be determined at random.

As described above, according to the wireless communication system 100, the transmit station 101 divides the information signal train into a plurality of data packets and estimates the quality of the transmission path 104 relative to the receive station 102 according to the received signal strength (RSSI) of the communication control packet transmitted from the receive station 102 and then transmits the data packet while selecting the optimum antenna based on the estimation result. Further, whenever the receive station 102 receives the transmitted packet from the transmit station 101, the receive station 102 switches the antenna for transmitting a response packet into a different antenna.
Accordingly, the antenna diversity gain is secured on the transmission path 104 even in the quasi-static fading environment and thus the transmission quality of the transmitted packet can be compensated; on the other hand, the wireless station 103 receives a plurality of data packets transmitted while the antennas are switched as irregularly fluctuating interference signals. That is, the interference signal component received in the wireless station 103 can be fluctuated with time without being standing, so that a time gap required for transmitting and receiving a packet using the wireless frequency band used by the transmit station 101 can be produced intentionally for the wireless station 103. Further, the transmission error rate fluctuates with time depending on the interference signal component and thus the error correction effect provided by transmission path coding and interleave or packet resending, etc., is enhanced. Consequently, the packet transmission efficiency in the wireless station 103 improves and therefore the use efficiency of the same frequency band in the limited radio propagation space can be improved.

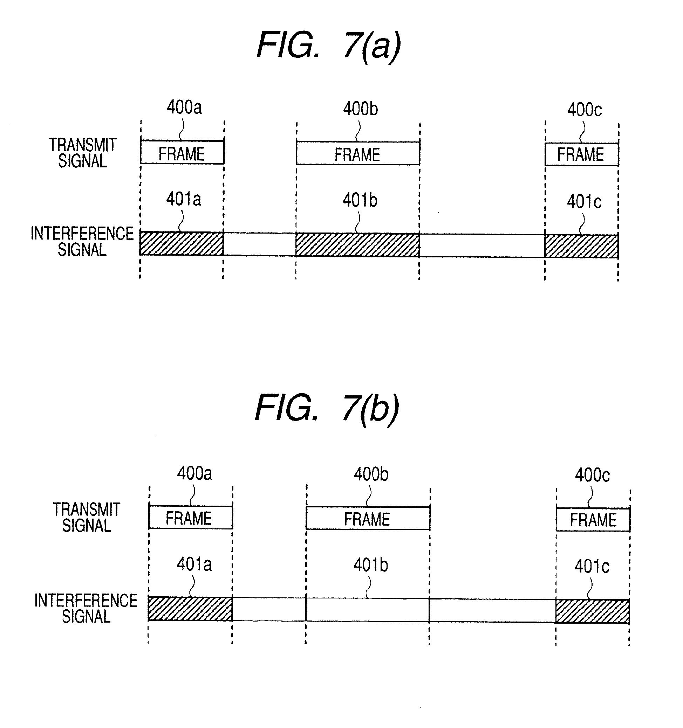

FIG. 7 (a) and FIG. 7 (b) are drawings to describe the advantages in the wireless communication system 100. In FIG. 7 (a), numerals 400a to 400c denote communication frames when the transmit station 101 and the receive station 102 communicate with each other with the antenna diversity in the related art in the static fading environment. Numerals 401a to 401c denote the times at which an interference signal component is observed in the wireless station 103 in the case. In FIG. 7(b), numerals 400a to 400c denote communication frames when the transmit station 101 and the receive station 102 communicate with each other according to the method of the embodiment in the quasi-static fading environment. Numerals 401a to 401c denote the times at which an interference signal component is observed in the wireless station 103 in the case.
As the antenna selected in the receive station 102 is switched each time a transmitted packet is received as in the embodiment, there is a possibility that the transmit antenna selected in the transmit station 101 may be changed. For example, if the transmit antenna is changed in the communication frame 400b, the possibility that no interference signal component may be observed at the time 401b in the wireless station 103 as shown in FIG. 7 (b) is raised. That is, as the most of the characteristic that the actual transmission path of wireless communications is discontinuous in the space is made, the packet transmit antenna of the transmit station 101 is changed, so that the transmit station 101 becomes no interference source for the wireless station 103 in the time period 401b and the interference signal component received in the wireless station 103 can be decreased. Consequently, the transmission path error rate relative to any desired signal received by the wireless station 103 lessens, so that the transmission quality can be improved.

As shown in the embodiment, the wireless communication system based on packet transmission involves not only degradation of the transmission path quality caused by lowering of received signal power, but also the possibility that a packet collision will always occur as a signal transmitted from any other wireless station becomes an interference signal. That is, the causes of transmission path errors are classified into lowering of received signal power and packet collision; in either case, the packet resending technique becomes indispensable to compensate a packet error occurring as a result. Particularly, a protocol for realizing automatic packet resending in a physical layer is usually called ARQ (Automatic Repeat Request).
Representative ARQs include a Stop-and-Wait method of determining an error for each packet and performing resending control and a Go-back-N method and a Selective-request method of receiving a plurality of packets successively and making a resending request only for an error occurring packet. Further, a resending method called Chase Combining is also commercially practical as a method of combining an error occurring packet and a resent packet, thereby providing higher diversity effect.
The wireless communication system shown in the embodiment can adopt any of the ARQ protocols as described above, but is not limited to the techniques.

The response packet shown in the embodiment need not necessarily be the control packet newly introduced for the purpose of antenna selection of the transmit station 101; for example, it may be an ACK packet or an NACK packet used to feed back permission or no permission of packet receiving in a communication system for executing packet transmission.
Particularly, it is also possible to control so that an antenna of the transmit station 101 is selected according to the processing shown in FIG. 5 only if the receive station 102 detects a packet error and transmits an NACK packet to the transmit station 101. According to the configuration, the antenna of the transmit station 101 is changed only if the transmit station 101 causes a packet error to occur, and the processing can be made efficient.

According to the wireless communication system 100, if the wireless station 103 receives a plurality of data packets transmitted from the transmit station 101 and attempts to intercept an information signal train, the received power of the data packet received in the wireless station 103 fluctuates irregularly with time and thus the errors on the transmission path occurs in the transmission path 105 and it is made impossible to restore an information signal precisely from the received signal. Consequently, communication interception in the transmission path 105 can be prevented, so that the security in the physical layer of wireless communications can be provided. Further, the processing basically can be performed independently of encryption and decryption using an arithmetic technique in related arts. Thus, the invention as well as the related arts is carried out, whereby higher security can be expected.

The wireless communication system 100 has the configuration for eliminating the need for performing processing of controlling the null direction of directivity using an adaptive array antenna and key generation and encryption processing based on the parameters of the transmission path. Thus, accuracy of antennas and feeding circuit is guaranteed and high performance of hardware to increase the signal processing amount is not demanded.

In the description given above, the quality information of the transmission path 104 established between the transmit station 101 and the receive station 102 is the estimation value of RSSI of the received signal strength of the communication control packet received from the receive station 102, but the quality information of the transmission path 104 is not limited to the estimation value of RSSI. This means that parameters to determine the line quality of wireless communications such as the bit error rate, the packet error rate, the packet resending frequency, Doppler shift, delay spread, rice factor, and angle spread can also be used as the quality information of the transmission path 104.

For the transmit packet generation section 504 of the transmit station 101 to input the information signal train to be transmitted to the receive station 102 and generate K data packets of data transmit packets, the information signal train can be divided into K data packets in a MAC layer of the wireless communication system 100 and can be divided into K data packets in the physical layer; in the embodiment, either configuration may be adopted.

The symbol mapping processing method in the modulation section 505 of the transmit station 101 and the modulation section 713 of the receive station 102 can use BPSK, QPSK, multivalued QAM, GMSK, GFSK, frequency hopping, for example. Signal processing to compensate the errors on the transmission path such as interleave or transmission path coding can also be previously performed and secondary modulation of direct spread, etc., can also be added, but not indispensable processing.

Here, humming code, Reed-Solomon code, convolutional code combined with Viterbi decoding, turbo code, and low-density parity check (LDPC) code can be adopted as transmission path code and further random interleaver based on the concept of S-random replacement can be adopted as interleaver, but the transmission path code and the interleaver are not limited.

As a circuit device for implementing the RF switch 509 of the transmit station 101, a device having a low insertion loss characteristic and high switching speed performance, such as a PIN diode switch of a semiconductor device or an MEMS switch of an RF-MEMS device, is useful, but the circuit device is not limited to them.

The antennas 508-1 to 508-M of the transmit station 101 can also be configured so as to have different polarization characteristics. Likewise, the antennas 704-1 to 704-N of the receive station 102 can also be configured so as to have different polarization characteristics. A packet is transmitted and received while a plurality of antennas different in polarization characteristic in transmit and receiven are switched with time, whereby when the transmission path 105 between the transmit station 101 and the wireless station 103 is in a line-of-sight propagation environment, it is also made possible to give intentional fading fluctuation to the transmission path 105.
The antennas 508-1 to 508-M of the transmit station 101 can also be configured so as to have different directivity patterns. Likewise, the antennas 704-1 to 704-N of the receive station 102 can also be configured so as to have different directivity patterns.

### (Second embodiment)

A wireless communication system of a second embodiment has a configuration wherein transmit power of a transmit packet transmitted from the transmit station 101 is controlled based on the quality of the transmission path 104 in the wireless communication system of the first embodiment. Only differences from the configuration described in the first embodiment will be discussed below:

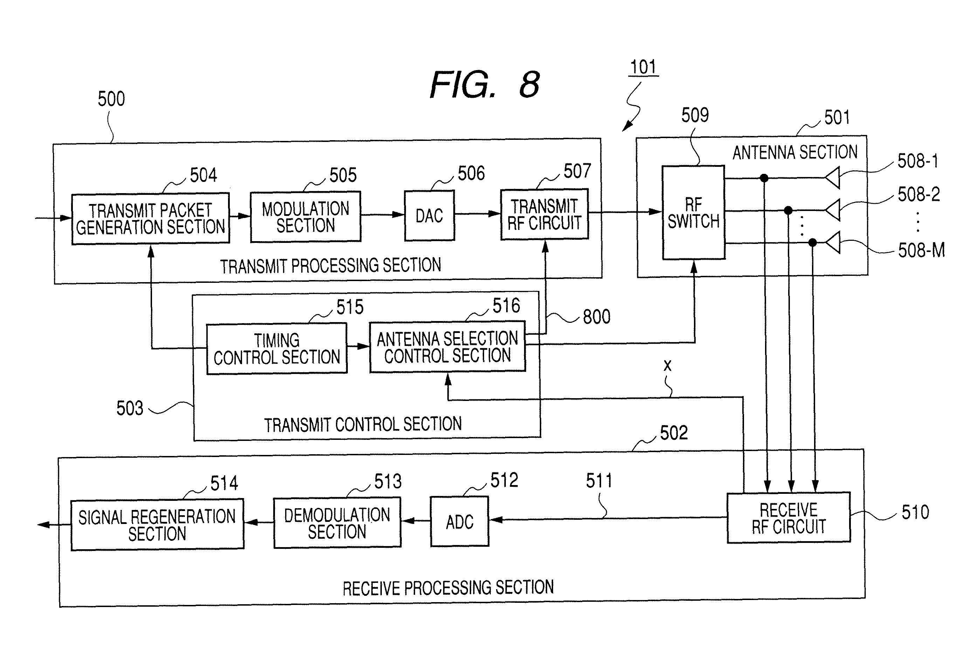

FIG. 8 is a diagram to show the schematic configuration of a transmit station of the wireless communication system to describe the second embodiment of the invention. Components similar to those in FIG. 2 are denoted by the same reference numerals in FIG. 8.
A transmit station 101 shown in FIG. 8 is configured so that an antenna selection control section 516 generates a power control signal 800 for controlling the transmit power of a transmit packet based on a quality information signal X and a transmit RF circuit 507 inputs the power control signal 800 and controls the transmit power.

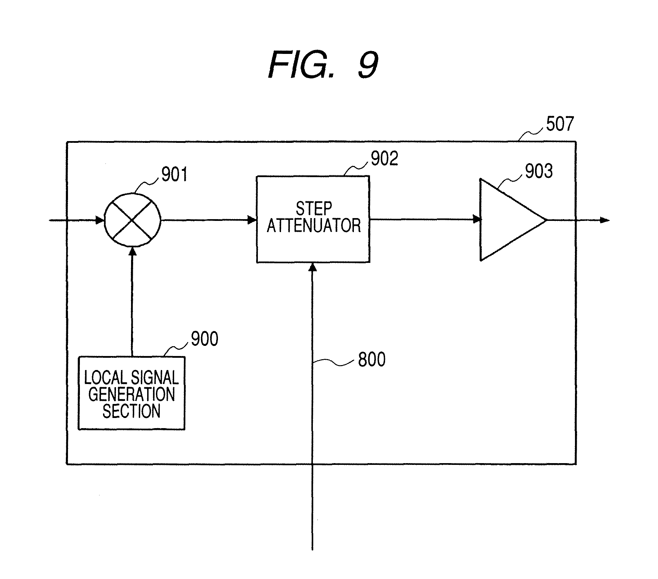

FIG. 9 is a diagram to show the schematic configuration of the transmit RF circuit 507 shown in FIG. 8.
As shown in FIG. 9, a transmit packet output from a DAC 506 is subjected to frequency conversion by a mixer 901 using a local signal generated by a local signal generation section 900 and is input through a step attenuator 902 to a power amplifier 903 for power amplification and then is output to an antenna section 501. In the embodiment, the antenna selection control section 516 generates a power control signal 800 for adjusting the step attenuator 902 of the transmit RF circuit 507 and outputs the power control signal to the step attenuator 902, whereby it is made possible to adjust the transmit power based on the quality information signal X.
The antenna selection control section 516 may select the maximum one of the estimation values of M RSSIs contained in the quality information signal X and may generate such a power control signal 800 setting the transmit power responsive to the selected estimation value. To do this, the antenna selection control section 516 may have a table wherein the estimation values of RSSIs and the transmit power are associated with each other.

The configuration as in FIG. 8 is adopted, whereby the transmit power of a transmit packet can be decreased as much as the diversity gain produced as the transmit station 101 selects the optimum antenna from among antennas 508-1 to 508-M, so that average interference signal power given to a wireless station 103 can be suppressed. Therefore, if the wireless station 103 attempts to intercept a packet, the average received power of a transmitted packet is suppressed and thus a relatively large transmission path error can be caused to occur in the wireless station 103 and information leakage can be prevented more effectively.

### (Third embodiment)

In the wireless communication system described in the first or second embodiment, the antenna selection control section 711 of the receive station 102 determines an antenna to be selected by the RF switch 705 at random and thus the antennas 704-1 to 704-N are selected at a uniform probability. Therefore, a sufficient diversity gain cannot necessarily be provided. Then, in a wireless communication system of a third embodiment, the probability is inclined.
Only differences from the configuration described in the first or second embodiment will be discussed below:

An antenna selection control section 711 of a receive station 102 of the third embodiment determines an antenna to be selected by an RF switch 705 according to a selection probability table indicating what probability each of antennas 704-1 to 704-N is to be selected at. The selection probability table is previously stored in memory in a receive station 102. A receive RF circuit 706 of the receive station 102 estimates the RSSI of a received packet from the antenna selected by the RF switch 705 and inputs the estimation value to the antenna selection control section 711. Whenever the antenna selection control section 711 inputs the estimation value of the RSSI from the receive RF circuit 706, it stores receive quality information associating the antenna receiving the transmitted packet and the estimation value of the RSSI of the transmitted packet with each other in the memory. The antenna selection control section 711 updates the selection probability table stored in the memory based on the receive quality information every predetermined time period.

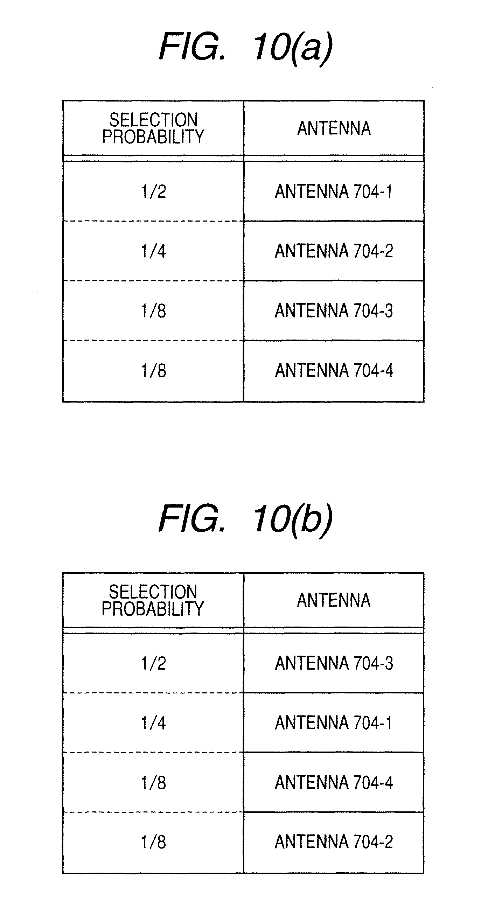

FIG. 10 is a drawing to show an example of the selection probability table.
In the example in FIG. 10, the number of antennas of the receive station 102 is four as N=4. As shown in FIG. 10, the selection probability table stores the selection probability indicating what probability each antenna is to be selected at. According to the selection probability table shown in FIG. 10 (a), it is seen that the antenna 704-1 is selected at the probability being one in two, the antenna 704-2 is selected at the probability being one in four, and each of the antennas 704-3 and 704-4 is selected at the probability being one in eight.
The antenna selection control section 711 updates the selection probability table with inclination so that the larger selection probability is assigned to the antenna with the larger average value of the estimation values of RSSIs, for example, based on a history of the estimation values of RSSIs of the transmitted packets received at the antenna 704-1, a history of the estimation values of RSSIs of the transmitted packets received at the antenna 704-2, a history of the estimation values of RSSIs of the transmitted packets received at the antenna 704-3, and a history of the estimation values of RSSIs of the transmitted packets received at the antenna 704-4 in a predetermined time period. The selection probability table shown in FIG. 10 (b) is a table resulting from updating the selection probability table shown in FIG. 10 (a). If an antenna is selected according to the table shown in FIG. 10 (b), the selection probability of the antenna 704-3 is raised and it is made possible to preferentially select the antenna with good receive quality. Therefore, a larger diversity gain can be provided in the transmission path 104 as compared with the case where any antenna is selected at random from among the antennas 704-1 to 704-N, so that the transmission path error rate can be furthermore decreased.

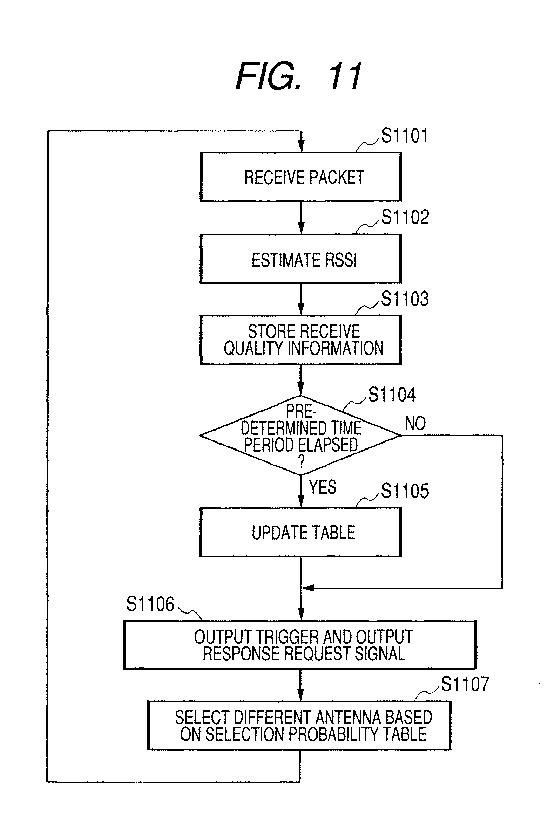

FIG. 11 is a flowchart to show an operation flow of the receive station 102 of the wireless communication system to describe the third embodiment of the invention.
In the receive station 102, when a transmitted packet from a transmit station 101 is received at the antenna 704-n (step S1101), the RSSI of the transmitted packet is estimated (step S1102) and is input to the antenna selection control section 711. The antenna selection control section 711 stores receive quality information associating the input RSSI and the antenna 704-n with each other in the memory (step S1103). Next, whether or not a predetermined time period has elapsed since the previous update of the selection probability table is determined and if the predetermined time period has elapsed (YES at step S1104), the antenna selection control section 711 updates the selection probability of each antenna based on the receive quality information stored in the memory and updates the selection probability table (step S1105). If the predetermined time period has not yet elapsed (NO at step S1104), the antenna selection control section 711 does not perform update processing of the selection probability table.

On the other hand, the transmitted packet received through the antenna 704-n is passed through a receive RF circuit 706, an ADC 707, a demodulation section 708, and a signal regeneration section 709 in order. From the signal regeneration section 709, a trigger is output to a timing control section 710 and a response request signal and an information signal are also output (step S1106). When receiving the trigger, the timing control section 710 outputs a switch timing control signal to the antenna selection control section 711. The antenna selection control section 711 determines an antenna 704-n' different from the currently selected antenna 704-n (n'≠n) from among the antennas 704-1 to 704-N in synchronization with the switch timing control signal based on the selection probability table, generates an antenna selection control signal to select the determined antenna, and outputs the antenna selection control signal to the RF switch 705. Then, whenever a transmitted packet is received from the transmit station 101, the described operation is repeated.

### (Fourth embodiment)

The schematic configuration of a wireless communication system to describe a fourth embodiment of the invention is similar to that shown in FIG. 1, but they differ slightly in configurations of transmit station 101 and receive station 102.

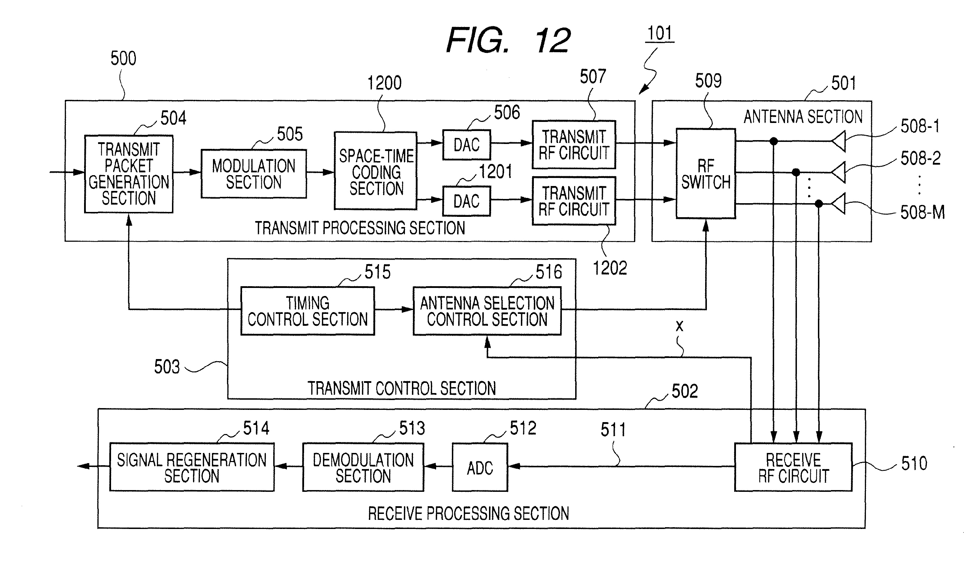

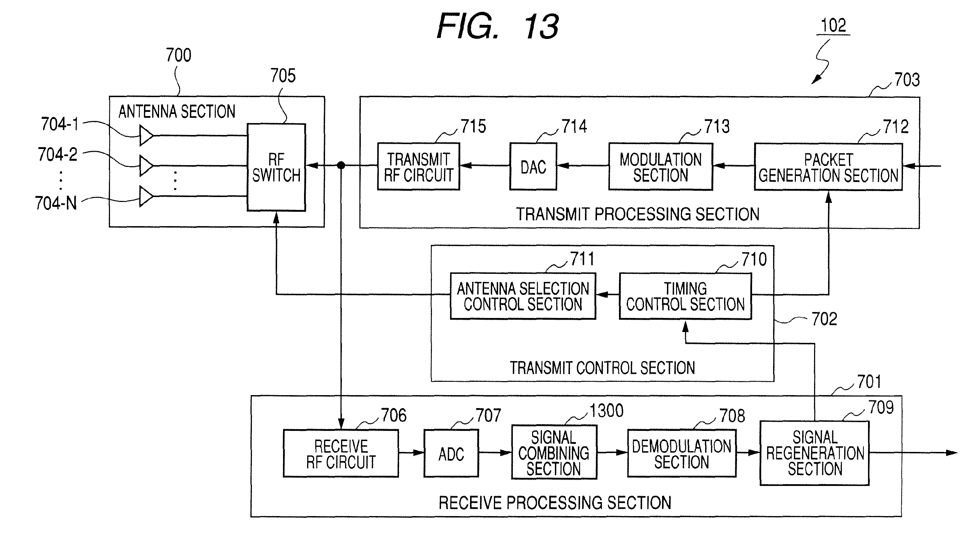

FIG. 12 is a diagram to show the schematic configuration of a transmit station of the wireless communication system to describe the fourth embodiment of the invention. FIG. 13 is a diagram to show the schematic configuration of a receive station of the wireless communication system to describe the fourth embodiment of the invention. Components similar to those in FIGS. 2 and 4 are denoted by the same reference numerals in FIGS. 12 and 13.
A transmit station 101 shown in FIG. 12 includes a space-time coding section 1200 for performing space-time coding of a modulation signal from a modulation section 505 using code shown in "S.M. Alamouti, "A Simple Transmit Diversity Technique for Wireless Communications," IEEE Journal on Select Areas in Communications, vol. 16, no. 8, Oct. 1998"," for example, to generate two coded signals and a new DAC 1201 and a new transmit RF circuit 1202 aside from a DAC 506 and a transmit RF circuit 507 in addition to the components shown in FIG. 2. The DAC 506 and the transmit RF circuit 507 and the DAC 1201 and the transmit RF circuit 1202 are connected in parallel to the space-time coding section 1200.

The two coded signals generated by the space-time coding section 1200 are converted from digital form into analog form in the DAC 506 and the DAC 1201 and then are up converted into radio frequencies in the transmit RF circuit 507 and the transmit RF circuit 1202 and are output to an antenna section 501 as two transmit RF signals. In this case, an antenna selection control section 516 generates an antenna selection control signal to select two antennas of 508-m1 and 508-m2 from among antennas 508-1 to 508-M based on a quality information signal X. An RF switch 509 selects the two antennas 508-m1 and 508-m2 in accordance with the antenna selection control signal, and the two transmit RF signals are transmitted through the selected antennas 508-m1 and 508-m2 to a receive station 102 at the same time. To select the two antennas 508-m1 and 508-m2, the largest and second largest estimation values of RSSIs may be selected and the two antennas where the values are obtained may be selected.

The receive station 102 shown in FIG. 13 includes a signal combining section 1300 for inputting a received baseband signal subjected to analog-digital conversion in an ADC 707 and buffering the two coded signals received at the antennas selected in an RF switch 705 and then combining the two coded signals and outputting the resultant signal to a demodulation section 708 in addition to the components shown in FIG. 4.
Accordingly, not only antenna diversity gain, but also code gain can be provided at the same time in a transmission path 104, so that the advantage that the transmission quality of a data packet can be compensated particularly in a low SNR transmission path can be provided.

In the transmit station 101 shown in FIG. 12, the number of the packet transmit antennas is two, but is not limited to two and may be two or more. The code is not limited to the code shown in "S.M. Alamouti, "A Simple Transmit Diversity Technique for Wireless Communications, "IEEE Journal on Select Areas in Communications, vol. 16, no. 8, Oct. 1998"." Further, a plurality of coding methods corresponding to the number of packet transmit antennas may be made appropriately selectable.

The fourth embodiment and the second or third embodiment can also be combined.

While the invention has been described in detail with reference to the specific embodiment, it will be obvious to those skilled in the art that various changes and modifications can be made without departing from the spirit and the scope of the invention.
The present application is based on Japanese Patent Application (No. 2004-130842) filed on April 27, 2004 and Japanese Patent Application (No. 2005-047702) filed on February 23, 2005, which are incorporated herein by reference.

### INDUSTRIAL APPLICABILITY

The wireless communication system according to the invention has the advantages that it suppresses the interference effect of a transmitted information signal on a different wireless station and that it prevents a third party from intercepting the information signal, and is suited as the access method of a mobile telephone, a wireless LAN, etc.

## Claims

1. A wireless communication system comprising a base station and an associated station for conducting wireless packet communications,
wherein the base station and the associated station have each a plurality of antennas,
wherein the base station comprises:
base station antenna selection means for selecting a packet transmit antenna from among the plurality of antennas;
antenna selection control means for specifying the antenna to be selected by the base station antenna selection means based on quality information of each transmission path established between the plurality of antennas and the antenna selected from among the plurality of antennas of the associated station; and
transmit control means for transmitting a packet to be transmitted to the associated station from the antenna selected by the base station antenna selection means, and
wherein the associated station comprises:
associated station antenna selection means for selecting one antenna from among the plurality of antennas;
receive means for receiving the packet through the antenna selected by the associated station antenna selection means; and
antenna switch control means for controlling so as to switch the antenna selected by the associated station antenna selection means to a different antenna in response to receiving the packet by the receive means.

2. The wireless communication system according to claim 1,
wherein the base station comprises transmit power control means for controlling transmit power of the packet based on the quality information.

3. The wireless communication system according to claim 1 or 2,
wherein the associated station comprises:
selection probability storage means for storing the selection probability indicating what probability each of the plurality of antennas is to be selected at;
receive quality information storage means for storing receive quality information associating the receive quality of the packet received at the receive means and the antenna receiving the packet with each other; and
selection probability update means for updating the selection probability based on the receive quality information, and
wherein the antenna switch control means determines the different antenna based on the selection probability.

4. The wireless communication system according to any of claims 1 to 3,
wherein the base station comprises space-time coding means for performing space-time coding of the packet to generate a plurality of coded packets,
wherein the base station antenna selection means selects as many antennas as the number responsive to the number of the coded packets,
wherein the transmit control means transmits the plurality of coded packets from the selected antennas to the associated station at the same time, and
wherein the associated station comprises combining means for combining the plurality of coded packets received in the receive means.

5. The wireless communication system according to any of claims 1 to 4,
wherein the base station comprises RSSI estimation means for estimating RSSIs of the packets received through the plurality of antennas from the antenna selected by the associated station antenna selection means, and
wherein the quality information is the estimated RSSI.

6. The wireless communication system according to any of claims 1 to 4,
wherein the packet contains a response request packet for making a request to send a receive response of the packet and a data packet,
wherein at the packet communication start time with the associated station, the transmit control means transmits the response request packet to the associated station from the antenna selected by the base station antenna selection means,
wherein the associated station receives the response request packet by the receive means and transmits a response packet of a response to the response request packet to the base station from a different antenna to which the antenna is switched by the antenna switch control means,
wherein the base station comprises RSSI estimation means for estimating RSSIs of the response packets received at the plurality of antennas,
wherein the quality information is the RSSI, and
wherein the transmit control means transmits the data packet to the associated station from the antenna selected by the base station antenna selection means according to the specification based on the quality information.

7. The wireless communication system according to claim 6,
wherein the data packet contains the response request packet.

8. The wireless communication system according to any of claims 1 to 7,
wherein the plurality of antennas of the base station and the associated stations have different characteristics.

9. A wireless station for conducting wireless packet communications with an associated station, the wireless station comprising:
a plurality of antennas;
antenna selection means for selecting a packet transmit antenna from among the plurality of antennas;
antenna selection control means for specifying the antenna to be selected by the antenna selection means based on quality information of each transmission path established between the plurality of antennas and the antenna selected from among a plurality of antennas of the associated station; and
transmit control means for transmitting a packet to be transmitted to the associated station from the antenna selected by the antenna selection means,
wherein the antenna selected from among the plurality of antennas of the associated station is switched to a different antenna each time the packet is received in the associated station.

10. The wireless station according to claim 9, comprising:
transmit power control means for controlling transmit power of the packet based on the quality information.

11. The wireless station according to claim 9 or 10, comprising:
space-time coding means for performing space-time coding of the packet to generate a plurality of coded packets,
wherein the antenna selection means selects as many antennas as the number responsive to the number of the coded packets, and
wherein the transmit control means transmits the plurality of coded packets from the selected antennas to the associated station at the same time.

12. The wireless station according to any of claims 9 to 11, comprising:
RSSI estimation means for estimating RSSIs of the packets received through the plurality of antennas of the wireless station from one antenna selected from among the plurality of antennas of the associated station,
wherein the quality information is the estimated RSSI.

13. A wireless station for conducting wireless packet communications with an associated station, the wireless station comprising:
a plurality of antennas;
antenna selection means for selecting one antenna from among the plurality of antennas;
receive means for receiving a packet transmitted from a packet transmit antenna selected from among a plurality of antennas of the associated station through the antenna selected by the antenna selection means; and
antenna switch control means for controlling so as to switch the antenna selected by the antenna selection means to a different antenna in response to receiving the packet by the receive means.

14. The wireless station according to claim 13, comprising:
selection probability storage means for storing the selection probability indicating what probability each of the plurality of antennas is to be selected at;
receive quality information storage means for storing receive quality information associating the receive quality of the packet received at the receive means and the antenna receiving the packet with each other; and
selection probability update means for updating the selection probability based on the receive quality information,
wherein the antenna switch control means determines the different antenna based on the selection probability.

15. The wireless station according to claim 13 or 14,
wherein the packet transmitted from the associated station is a plurality of coded packets generated by performing space-time coding of the packet, and
wherein the wireless station comprises combining means for combining the plurality of coded packets received in the receive means.

16. The wireless station according to any of claims 9 to 15,
wherein the plurality of antennas have different characteristics.
